# EUROPEAN PATENT SPECIFICATION

(11) **EP 2 947 359 B1**
(45) Date of publication and mention of the grant of the patent: **05.07.2017**
(21) Application number: 13720977.1
(22) Date of filing: 21.01.2013
(51) Int. Cl.: F16K 3/02

(54) **KNIFE GATE VALVE**
ABSPERRSCHIEBER
VANNE A GUILLOTINE

(43) Date of publication of application: 25.11.2015
(73) Proprietor: Orbinox Valves International, S.L., 20270 Anoeta Guipuzcoa (ES)
(72) Inventor: PALOMEQUE, Manuel, E-20270 Anoeta (Guipúzcoa) (ES)
(74) Representative: Pons
(86) International application number: PCT/ES2013/070020
(87) International publication number: WO 2014/111603

(56) References cited:
- US-A- 4 773 627
- US-A1- 2005 285 071
- US-A1- 2006 131 534

## Description

### OBJECT OF THE INVENTION

The present invention is included in the technical field of knife gate valves. In particular, the present invention proposes a valve comprising a sleeve especially designed to allow the correct sealing of the closure without making a channel in the valve body for its placement.

### BACKGROUND OF THE INVENTION

Knife gate valves are designed for the interruption and/or regulation of the passage of a fluid. This type of valves comprises a gate therein, this gate being the closing element and which allows the closure and opening of an opening made in the valve body, wherethrough the corresponding fluid passes.

A type of knife gate valves called knife gate valves of unidirectional closure are known in the state of the art. These comprise a sleeve situated concentric with the orifice for the passage of fluid, and the sleeve is positioned in parallel with said orifice. Thus, when the gate is in the closed valve position, i.e. plugging the fluid through-hole, the sleeve is in frontal contact with the gate. In these valves the sleeve is only in contact with one face of the gate.

Another type of valves known in the state of the art are knife gate valves called bidirectional. These valves comprise a sleeve with a semi-circumference form which lies in the lower part of the valve, in the area between the end of the gate that displaces closing the orifice, and the interior of the valve body where it makes contact to close said orifice. The sleeve or seal is peripheral and is always in contact with the gate whilst it moves.

A technical problem that the two designs described share is the need to make an inner channel in the valve opening area. In the first case, a circular inner channel is necessary, which has a perimeter slightly greater than that of the opening and which is situated in parallel to said opening. In the second case, it is necessary to make a channel in the lower part of the opening in the interior whereof the sleeve is trapped when the opening is closed with the gate. To make this channel, specific machining means are necessary, in particular cutter bar-type machining. The sleeve is placed on this channel when the gate closes, it presses on the sleeve, making it fit into the groove and thus guaranteeing the sealing.

An important disadvantage of the knife gate valves of the state of the art is precisely this channel which must be machined in the inner part of the opening, since it can be filled with dirt and residues can accumulate in it.

From the state of the art it is known document US4773627 which describes a gate valve comprising a body having opposing upstream and downstream sides with conduit-joining surface formed thereon. A resilient liner is attached to the body between the valve gate and the body and which covers the portion of the body that defines the port. The liner includes a sealing surface configured for sealing contact with the portion of the edge surface of the gate that resides within the body when the gate is in the closed position. Includes at least one seal ring positioned against the body at the periphery of the port on one side of the gate. The seal member has a gate-engaging part located adjacent the gate.

It is also known document US2006131534 that describes a valve for controlling the flow of materials. The valve has a valve body having a bore, a guide attached to the valve body, a gate movable within the guide into and out of the bore, and an actuator for the gate. The bore of the valve body has a profile where the gate enters the bore, and the gate has a concave leading edge conforming to a profile of the bore.

### DESCRIPTION OF THE INVENTION

The present invention resolves the mentioned technical problem by a hybrid knife gate valve which performs a double front closure in the first part of the closure path and a peripheral-type closure in the second part of the path, when valve closure is completed.

The valve body has an upper part wherein there is a flat notch which serves as passage for a gate which acts as closing element of the valve. Said flat notch extends to a lower part of the valve body wherein there is an opening for the passage of fluid.

The double front closure occurs in the upper part of the opening. It is achieved having the valve gate surrounded by a sleeve, which guarantees the sealing of the closure, situated on both sides of the gate. Thus, the sleeve performs pressure from both sides of the gate.

The peripheral closure occurs in the lower part of the opening. It is achieved having the sleeve comprising a section with a central core which is the contact surface of the gate in the closed valve position. In an embodiment of the invention this central core may have a contour coinciding with the contour of the gate end.

Hence, the valve of the present invention combines the advantages of the different closure systems of knife gate valves known in the state of the art. Another important advantage of the design of this valve is that the valve opening does not have inner channels for the placement of the sleeve but it is the actual sleeve which has a specially designed section to make it possible to obtain the two types of aforementioned closures.

The sleeve of the present invention is completely adapted to the valve body opening. Additionally, the sleeve comprises a groove which coincides with the flat notch in the upper part of the opening, allowing the passage of the gate therethrough. The sleeve section comprises a central core from which recesses emerge on both sides.

The valve comprises a pair of fastening rings which are positioned following the contour of the valve opening. Said additional elements fix the sleeve to the valve body and they also act as decorative element as they protrude from the lateral faces of the body. In their final position they are separated from one another by the gate.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1..- Shows an exploded view of the present valve wherein all its component elements can be observed.
Figure 2. - Shows a sectional view of the knife gate valve of the present invention.

### PREFERRED EMBODIMENT OF THE INVENTION

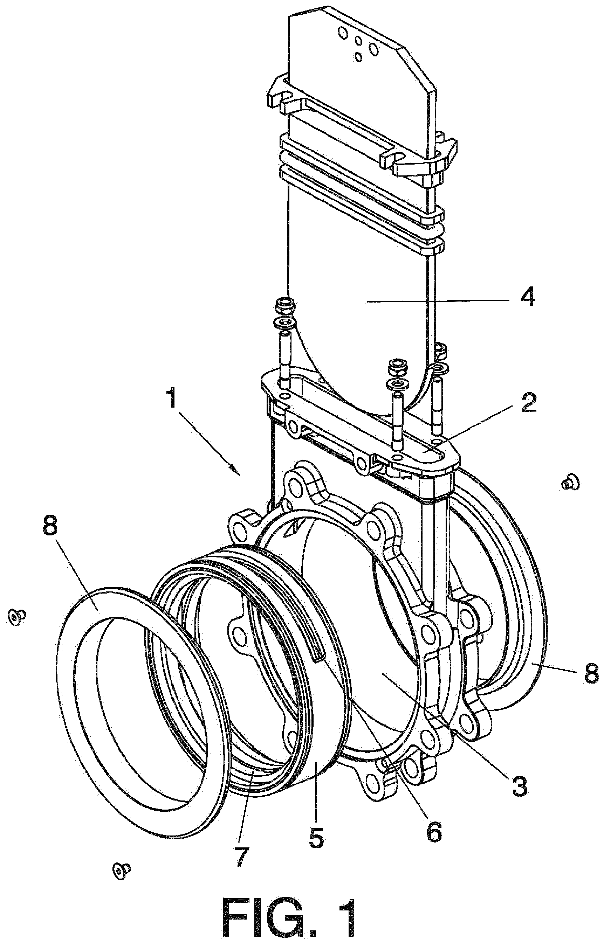

A detailed description of a preferred embodiment of the invention is described below with the aid of figures 1 to 3 mentioned above.

The knife gate valve of the present invention is hybrid and comprises in the first part of the closure path of the gate, a double front closure, and in the second part of the path, when the closure of the opening is completed, a peripheral-type closure.

In general terms, the knife gate valve of the present invention comprises a body (1) which has an upper part including a flat notch (2) for the passage of a gate (4) which acts as closing element and has a lower part including an opening (3). Said flat notch (2) traverses the body (1) from the upper part to the opening (3). The most important characteristic of the valve is that it comprises a sleeve (5) in the interior of the opening (3) comprising a groove (6) coinciding with the flat notch (2) in the upper part of the opening (3) and the section whereof comprises a central core (7). According to the invention, said sleeve (5) has recesses on both sides of said central core (7). The valve has a pair of fastening rings (8) which are identical and which are placed on both sides of the valve body (1), covering the perimeter of the opening (3) and which have an inner section complementary to the section of the sleeve (5). Figure 1 shows an exploded view of the present valve wherein all its component elements can be observed.

The flat notch (2) traverses the valve body (1) from the upper part to the opening (3). The valve further comprises joining means which allow its joining to pipes or receptacles between which the valve is positioned in each specific case. An important characteristic of the valve of the present invention is that it does not include inner channels in the opening (3).

The gate (4) of the present valve is a flat piece which allows opening or closing the opening (3) to control the passage of a fluid, moving longitudinally through the flat notch (2). In a preferred embodiment, the gate (4) has a semicircular end.

The valve of the present invention fundamentally stands out due to the sleeve (5), which makes it possible to perform a double front closure and a peripheral closure in the valve. This sleeve (5) has a circumferential form and is placed covering the inner perimeter of the valve opening (3). The outer part of the sleeve (5) is a flat surface, coinciding with the flat surface of the interior of the opening (3).

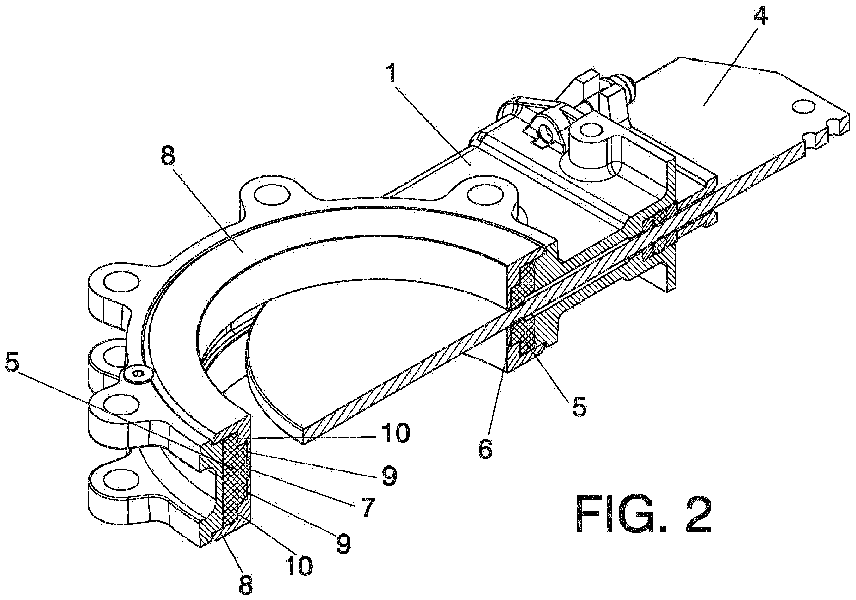

The double front closure of the valve is achieved in the upper part of the opening (3) due to action of the peripheral edge of the groove (6) through the interior whereof passes the gate (4), so that the gate (4) is interlocked, in its displacement, between part of the sleeve (5) on one side of the groove (6), which presses in one direction, and part of the sleeve (5) on the other side of the groove (6), which presses in the other direction. The peripheral-type closure is achieved in the lower part of the opening (3) where the total closure of the valve occurs when the end of the gate (4) comes into contact with the central core (7) of the sleeve (5). Figure 2 shows the areas of contact between the sleeve (5) and the gate (4).

The knife gate valve of the present invention further comprises a pair of fastening rings (8). These fastening rings (8) are identical to one another and are placed one on either side of the valve body (1), covering the perimeter of the opening (3). The function of the fastening rings (8) is to guarantee the fixing of the sleeve (5) in its position to the valve body (1). The inner section of the fastening rings (8) is complementary to the section of the sleeve (5) and they have a projecting section which lies over the lateral faces of the valve body (1). The fastening rings (8) are separated from one another by the gate (4). According to the invention, the sleeve (5) has two recesses on different sides of the central core (7), as can be observed in figure 2. Thus, the sleeve (5) comprises a first recess (9) on both sides of the central core (7) and comprises a second recess (10) beside the first recess (9). The inner section of the fastening rings (8) is complementary with the section of the sleeve (5) for which reason in this embodiment, the inner section of the fastening rings comprises a first projection corresponding to the first recess (9) and a second projection corresponding to the second recess (10).

## Claims

1. Knife gate valve of the type comprising a body (1) having an upper part including a flat notch (2) for the passage of a gate (4) which acts as closing element, and having a lower part including an opening (3) and where the flat notch (2) traverses the body (1) from the upper part to the opening (3), wherein:
- the surface of the interior of the opening (3) does not include inner channels;
- the knife gate valve comprises a sleeve (5) in the interior of the opening (3) comprising a groove (6) coinciding with the flat notch (2) in the upper part of the opening (3) so the gate (4) is surrounded by the sleeve (5), and the section of said sleeve (5) comprises a central core (7) which is the contact surface with the gate (4) in closed valve position; and
- the knife gate valve comprises a pair of fastening rings (8) which are identical and which are placed on both sides of the valve body (1), covering the perimeter of the opening (3) and which have an inner section complementary to the section of the sleeve (5), **characterised in that**:
- the sleeve (5) has recesses on both sides of the central core (7),
- the sleeve (5) comprises a first recess (9) on each side of the central core (7) and comprises a second recess (10) beside each of the first recesses (9); and **in that** the inner section of the fastening rings (8) comprises a first projection corresponding to the first recess (9) and a second projection corresponding to the second recess (10).

## Patentansprüche

1. Absperrschieber von der Art, die einen Körper (1) umfasst, der einen oberen Teil aufweist, der eine flache Einkerbung (2) für den Durchgang einer Platte (4) beinhaltet, welche als Verschlusselement wirkt, und einen unteren Teil aufweist, der eine Öffnung (3) beinhaltet, und wo die flache Einkerbung (2) den Körper (1) vom oberen Teil zur Öffnung (3) durchquert, wobei:
- die Oberfläche des Inneren der Öffnung (3) keine inneren Kanäle beinhaltet;
- der Absperrschieber eine Hülse (5) im Inneren der Öffnung (3) umfasst, die eine Nut (6) umfasst, die mit der flachen Einkerbung (2) im oberen Teil der Öffnung (3) übereinstimmt, so dass die Platte (4) von der Hülse (5) umschlossen wird, und der Abschnitt der Hülse (5) einen zentralen Kern (7) umfasst, welcher die Kontaktfläche mit der Platte (4) in der geschlossenen Schieberstellung ist; und
- der Absperrschieber ein Paar Befestigungsringe (8) umfasst, welche identisch sind und welche auf beiden Seiten des Schieberkörpers (1) platziert sind, die den Umfang der Öffnung (3) abdecken, und welche einen inneren Abschnitt aufweisen, der zum Abschnitt der Hülse (5) komplementär ist, **dadurch gekennzeichnet, dass**:
- die Hülse (5) Aussparungen auf beiden Seiten des zentralen Kerns (7) aufweist,
- die Hülse (5) eine erste Aussparung (9) auf jeder Seite des zentralen Kerns (7) umfasst und eine zweite Aussparung (10) neben jeder der ersten Aussparungen (9) umfasst; und dass der innere Abschnitt der Befestigungsringe (8) einen ersten Vorsprung, der der ersten Aussparung (9) entspricht, und einen zweiten Vorsprung, der der zweiten Aussparung (10) entspricht, umfasst.

## Revendications

1. Robinet-vanne à guillotine du type comprenant un corps (1) ayant une partie supérieure comportant une encoche plane (2) pour le passage d'une trappe (4) qui agit comme un élément de fermeture, et ayant une partie inférieure comportant une ouverture (3) et où l'encoche plane (2) traverse le corps (1) depuis la partie supérieure jusqu'à l'ouverture (3), dans lequel :
- la surface de l'intérieur de l'ouverture (3) ne comporte pas de canaux internes ;
- le robinet-vanne à guillotine comprend un manchon (5) à l'intérieur de l'ouverture (3) comprenant une rainure (6) coïncidant avec l'encoche plane (2) dans la partie supérieure de l'ouverture (3) de sorte que la trappe (4) est entourée du manchon (5), et la section dudit manchon (5) comprend un coeur central (7) qui est la surface de contact avec la trappe (4) dans une position de vanne fermée ; et
- le robinet-vanne à guillotine comprend une paire d'anneaux de serrage (8) qui sont identiques et qui sont placés sur les deux côtés du corps de vanne (1), recouvrant le périmètre de l'ouverture (3) et qui ont une section interne complémentaire à la section du manchon (5), **caractérisé en ce que** :
- le manchon (5) a des renfoncements sur les deux côtés du coeur central (7),
- le manchon (5) comprend un premier renfoncement (9) sur chaque côté du coeur central (7) et comprend un deuxième renfoncement (10) près de chacun des premiers renfoncements (9) ; et **en ce que** la section interne des anneaux de serrage (8) comprend une première protubérance correspondant au premier renfoncement (9) et une deuxième protubérance correspondant au deuxième renfoncement (10).
